Europäisches Patentamt

European Patent Office

Office européen des brevets

(11) Veröffentlichungsnummer: **0 149 228 B1**

# EUROPÄISCHE PATENTSCHRIFT

(45) Veröffentlichungstag der Patentschrift: **14.08.91**

(51) Int. Cl.⁵: **H02K 5/24**, H02K 1/18, H02K 29/00

(21) Anmeldenummer: **84116201.9**

(22) Anmeldetag: **22.12.84**

Teilanmeldung 91100690.6 eingereicht am 22/12/84.

(54) **Elektromotor, insbesondere kollektorloser Gleichstrommotor.**

(30) Priorität: **28.12.83 DE 3347360**
**12.01.84 US 570187**

(43) Veröffentlichungstag der Anmeldung:
**24.07.85 Patentblatt 85/30**

(45) Bekanntmachung des Hinweises auf die Patenterteilung:
**14.08.91 Patentblatt 91/33**

(84) Benannte Vertragsstaaten:
**AT CH DE FR GB IT LI**

(56) Entgegenhaltungen:
**DE-A- 2 811 283**
**FR-A- 2 350 721**
**FR-A- 2 559 319**
**GB-A- 1 310 981**
**GB-A- 2 092 834**

(73) Patentinhaber: **PAPST-MOTOREN GmbH & Co. KG**
**Karl-Maier-Strasse 1 Postfach 35**
**W-7742 St. Georgen/Schwarzwald 1(DE)**

(72) Erfinder: **Von der Heide, Johann,Dipl.Ing.**
**Marktstrasse 15**
**W-7230 Schramberg(DE)**
Erfinder: **Körner, Ernst-Moritz**
**Ginsterweg 5**
**W-7742 St. Georgen-Brigach(DE)**
Erfinder: **Müller, Rolf, Dr. Ing.**
**Joh.-Georg-Schultheiss-Weg 3**
**W-7742 St. Georgen(DE)**

(74) Vertreter: **Schwan, Gerhard, Dipl.-Ing.**
**Elfenstrasse 32**
**W-8000 München 83(DE)**

## Beschreibung

Die Erfindung betrifft einen kollektorlosen Außenläufer-Gleichstrommotor, der vorzugsweise zum Antrieb Von Plattenspeichern bestimmt ist, sich aber auch für andere Antriebsaufgaben, vor allem im Bürobereich, eignet, und der einen im wesentlichen zylindrischen Luftspalt zwischen Stator und Rotor hat, wobei der Stator an einem Lagerteil für die Lagerung der Rotorwelle angebracht ist.

Es sind kollektorlose Außenläufer-Gleichstrommotore zum Antrieb von Hartplattenspeichern bekannt (GB-A-2 092 834), die versehen sind mit

einem Stator und einem Rotor, die zwischen sich einen im wesentlichen zylindrischen Luftspalt bilden, wobei der Stator Statoreisen und eine Statorwicklung aufweist, die bei Erregung ein Elektromagnetfeld erzeugt, wobei der Rotor mit einem im wesentlichen becherförmigen Rotorgehäuse ausgebildet ist und einen Permanentmagnetring trägt und wobei zwischen Rotor und Stator elektromagnetische Kräfte wirken, wenn die Statorwicklung erregt wird;

einer Rotorwelle, die den Rotor trägt und mit diesem drehfest verbunden ist;

einer Lagerung zum drehbaren Lagern der Rotorwelle; und

einem feststehenden, im wesentlichen rohrförmigen Lagertragteil, das koaxial zu der Rotorwelle angeordnet ist, wobei die Lagerung innerhalb des Lagertragteils sitzt und von diesem abgestützt ist und wobei der Stator außerhalb des Lagertragteils angeordnet und von diesem abgestützt ist.

Die zulässigen Geräuschemissionen von Geräten, die am Arbeitsplatz im Büro stehen, werden immer weiter herabgesetzt. Insbesondere gilt dies für Arbeitsplatzrechner. In solche Rechner wird schon heute eine sehr hohe Rechner- und Speicherleistung eingebaut, und die Rechner sind in der Regel mit Plattenspeichern, insbesondere Hartplattenspeichern, und Lüftern ausgestattet. Die einzigen Komponenten, die in einem solchen Fall Geräusche emittieren, sind die Antriebsmotoren für die Plattenspeicher und Lüfter.

Man könnte daran denken, bei einem Plattenspeicher z.B. entweder den Motor als Ganzes weichelastisch aufzuhängen oder für die Lagerung der Rotorwelle vorgesehene Kugellager, die bekanntlich die Hauptgeräuschquelle darstellen, elastisch zu montieren. Beide Maßnahmen sind aber gerade bei einem Plattenspeicher nicht praktikabel, weil beispielsweise im Falle eines Hartplattenspeichers nicht wiederholbare Lageveränderungen der Rotorachse, d.h. der nicht wiederholbare Schlag, kleiner als zum Beispiel 1 µm sein müssen.

Der Erfindung liegt die Aufgabe zugrunde, einen für den Antrieb von Hartplattenspeichern, aber auch von anderen Geräten, geeigneten kollektorlosen Außenläufer-Gleichstrommotor zu schaffen, der eine besonders niedrige Geräuschemission hat und der zugleich mit sehr kleinem nicht wiederholbarem Schlag ausgeführt werden kann.

Diese Aufgabe wird erfindungsgemäß gelöst durch einen kollektorlosen Außenläufer-Gleichstrommotor, insbesondere zum Antrieb eines Hartplattenspeichers, mit

einem Stator und einem Rotor, die zwischen sich einen im wesentlichen zylindrischen Luftspalt bilden, wobei der Stator mit Statoreisen und einer Statorwicklung versehen ist, die bei Erregung ein Elektromagnetfeld erzeugt, wobei der Rotor mit einem im wesentlichen becherförmigen Rotorgehäuse ausgebildet ist und einen Permanentmagnetring trägt und wobei zwischen Rotor und Stator elektromagnetische Kräfte wirken, wenn die Statorwicklung erregt wird;

einer Rotorwelle, die den Rotor trägt und mit diesem drehfest verbunden ist;

einer Lagerung zum drehbaren Lagern der Rotorwelle;

einem feststehenden, im wesentlichen rohrförmigen Lagertragteil, das koaxial zu der Rotorwelle angeordnet ist, wobei die Lagerung innerhalb des Lagertragteils sitzt und von diesem abgestützt ist und wobei der Stator außerhalb des Lagertragteils angeordnet und von diesem abgestützt ist;

dadurch gekennzeichnet, daß bei dem Motor zur Geräuschminderung die magnetischen Komponenten von Rotor und Stator derart mit Bezug aufeinander angeordnet sind, daß die Summe der magnetischen Axialkräfte zwischen Rotor und Stator minimiert ist.

Durch die erfindungsgemäße Lösung lassen sich zur Geräuschentwicklung beitragende magnetische Unsymmetrien unschädlich machen, die unter anderem schon durch die becherförmige Ausbildung des Rotorgehäuses verursacht sein können. Magnetische Unsymmetrien können zusätzlich auch entstehen, wenn für die von der Rotorstellung abhängige Kommutierung der Ströme in den Motorwicklungen ein oder mehrere galvanomagnetische Sensoren, beispielsweise Hall-Generatoren oder Hall-ICs benutzt werden, die im Einflußbereich des Rotormagnetfeldes liegen. In diesem Fall wird auf der dem oder den Sensoren zugekehrten Seite ein gewisser axialer Überstand des Rotormagneten notwendig, um eine für die Ansteuerung der Sensoren ausreichende Magnetflußdichte zu gewährleisten. Auf der gegenüberliegenden Seite wird der axiale Überstand dagegen zweckmäßig kleiner gehalten, um teueres Magnetmaterial und/oder axiale Baulänge einzusparen. Man kommt so zu einem permanentmagnetischen Rotor, dessen zur Achse senkrechte, magnetisch wirksame Symmetrieebene mit Bezug auf die zur Achse senkrechte Symmetrieebene des Statoreisens axial versetzt ist. Die unterschiedliche Größe der axialen Überstände hat zur Folge, daß auf den Rotor, dessen Magnet sich magnetisch symmetrisch zu dem Statoreisen einzustellen sucht, eine Axialkraft ausgeübt wird. Diese Kraft ist im allgemeinen drehstellungsabhängig, beispielsweise weil der Luftspalt zwischen Rotor und Stator nicht überall gleiche Abmessungen hat. Dies kann dann zu elektromagnetisch erzeugten Geräuschen führen. Dem kann in weiterer Ausgestaltung der Erfindung dadurch begegnet werden, daß der Stator ein Endblech trägt, das zur axialen Symmetrierung des Magnetfeldes mit dem Rotormagneten zusammenwirkt und vorzugsweise mindestens einen Teil des Luftspalts im Bereich des größeren Überstandes begrenzt.

Entsprechend einer abgewandelten Ausführungsform der Erfindung lassen sich elektromagnetisch bedingte Geräusche dadurch reduzieren, daß im Bereich des größeren axialen Überstandes des Rotormagneten über die Stirnseiten des Statoreisens die Induktion im mittleren Teil der Rotormagnetpole mindestens bereichsweise schwächer gemacht wird als an den an die Pollücken angrenzenden Randbereichen der Rotormagnetpole. Auch dadurch läßt sich eine Axialkraftsymmetrierung erzwingen, während gleichzeitig ein sicheres Ansprechen der Drehstellungssensoren gewährleistet ist.

Wesentlich ist, daß eine magnetische Symmetrierung insgesamt derart erfolgt, daß die Summe der magnetischen Axialkräfte zwischen Rotor und Stator beim fertig montierten Motor möglichst klein, vorzugsweise Null, ist.

Die Geräuschunterdrückung läßt sich dadurch weiter verbessern, daß der Stator mit dem Lagertragteil über eine elastische Dämpfungsanordnung verbunden wird. Bei einem solchen Aufbau werden Lagergeräusche wirkungsvoll vermindert, da in der Lagerung, beispielsweise den Kugellagern, entstehende Schallwellen nicht mehr am Stator reflektiert werden und somit an einem Hin- und Herlaufen zwischen Lagerung und Stator gehindert sind. Umgekehrt werden auch im Stator elektromagnetisch erzeugte Geräusche an einem Hin- und Herreflektieren zwischen Stator und Lagerung gehindert. Die elastische Dämpfungsanordnung ist vorzugsweise axial im Bereich der Lagerung der Rotorwelle angeordnet und axial kurz ausgebildet. Sie kann zweckmäßig eine weiche Vergußmasse zwischen dem Stator und dem Lagerteil aufweisen, welche vorteilhaft nach dem Aushärten ein mit dem Stator und/oder dem Lagertragteil formschlüssig verbundenes Zwischenstück bildet. Dieses Zwischenstück kann zweckmäßig Ringform haben. Eine solche Dämpfungsanordnung läßt sich fertigungsmäßig besonders einfach herstellen und sorgt gleichwohl für eine weitgehende Dämpfung zwischen Lagertragteil und Stator. Entsprechend einer abgewandelten Ausführungsform kann die elastische Dämpfungsanordnung auch ein oder mehrere vorgefertigte elastische Bauteile, insbesondere elastische O-Ringe, aufweisen. Für eine sichere Halterung des Stators am Lagertragteil greift vorzugsweise der O-Ring mit einem Teil seines Querschnitts in eine entsprechende Nut an den einander zugewendeten Flächen von Stator und/oder Lagertragteil ein.

Zur weiteren Absenkung des Geräuschpegels des kollektorlosen Außenläufer-Gleichstrommotors können ferner der Stator und das Lagertragteil im Bereich mindestens eines wesentlichen Teils ihrer einander zugewendeten Flächen durch einen Luftspalt voneinander getrennt sein, der sich vorzugsweise über einen großen Teil der axialen Statoreisenlänge erstreckt. Vorzugsweise trennt der Luftspalt den Stator und das Lagertragteil vor allem in dem für die Geräuschübertragung kritischen Bereich, welcher der Lagerung der Rotorwelle benachbart ist. Bei kombiniertem Einsatz von elastischer Dämpfungsanordnung und dem erwähnten Luftspalt stehen der Stator und das Lagertragteil vorzugsweise im wesentlichen nur im Bereich der elastischen Dämpfungsanordnung miteinander in Verbindung, während sie im übrigen durch den Luftspalt voneinander getrennt sind.

In weiterer Ausgestaltung der Erfindung ist die Rotorwelle in zwei Kugellagern mit jeweils unterschiedlicher Anzahl von Kugeln gelagert. Dieses Merkmal senkt gleichfalls die Geräuschemission.

Wenn das Lagertragteil in bekannter Weise (GB-A-2 092 834) mit einem sich im wesentlichen senkrecht zu der Achse der Rotorwelle erstreckenden Befestigungsflansch verbunden ist, kann zur weiteren Geräuschreduzierung der Befestigungsflansch einen schalldämpfenden Belag aufweisen. Trägt der Befestigungsflansch, wie an sich ebenfalls bekannt (GB-A-2 092 834), eine Leiterplatte und/oder eine magnetische Abschirmung, kann der Befestigungsflansch in weiterer Ausgestaltung der Erfindung mit der Leiterplatte und/oder der magnetischen Abschirmung zu einem schalldämpfenden Mehrschichtkörper verbunden sein. Dabei kann zweckmäßig zwischen den Schichten des Mehrschichtkörpers eine weiche Vergußmasse und/oder ein elastischer Kleber vorgesehen sein. Es zeigte sich, daß so eine wesentliche Geräuschminderung selbst dann möglich ist, wenn im Interesse der Genauigkeitsanforderung für die Position der Rotorachse mit Bezug auf den Befestigungsflansch der letztere und das Lagertragteil einstückig ausgebildet sind.

Durch im Boden des becherförmigen Rotorgehäuses verteilte Öffnungen ist gleichfalls eine weitere merkliche Verminderung der Geräuschemission möglich.

Die Erfindung ist im folgenden anhand von bevorzugten Ausführungsbeispielen näher erläutert.

In den beiliegenden Zeichnungen zeigen:

Fig. 1      einen Schnitt durch einen erfindungsgemäß aufgebauten Antriebsmotor für einen Hartplattenspeicher,

Fig. 2      eine Teilabwicklung des Rotormagneten des Motors nach Fig. 1,

Fig. 3      in größerem Maßstab einen Teilschnitt durch den Befestigungsflansch des Motors nach Fig. 1 mit Leiterplatte und magnetischer Abschirmung,

Fig. 4      eine abgewandelte Ausführungsform ähnlich Fig. 1 im Schnitt,

Fig. 5      einen Schnitt durch einen Plattenspeicherantriebsmotor entsprechend einer weiter abgewandelten Ausführungsform der Erfindung, und

Fig. 6      eine Draufsicht auf die Unterseite des Rotorgehäuses des Motors nach Fig. 5.

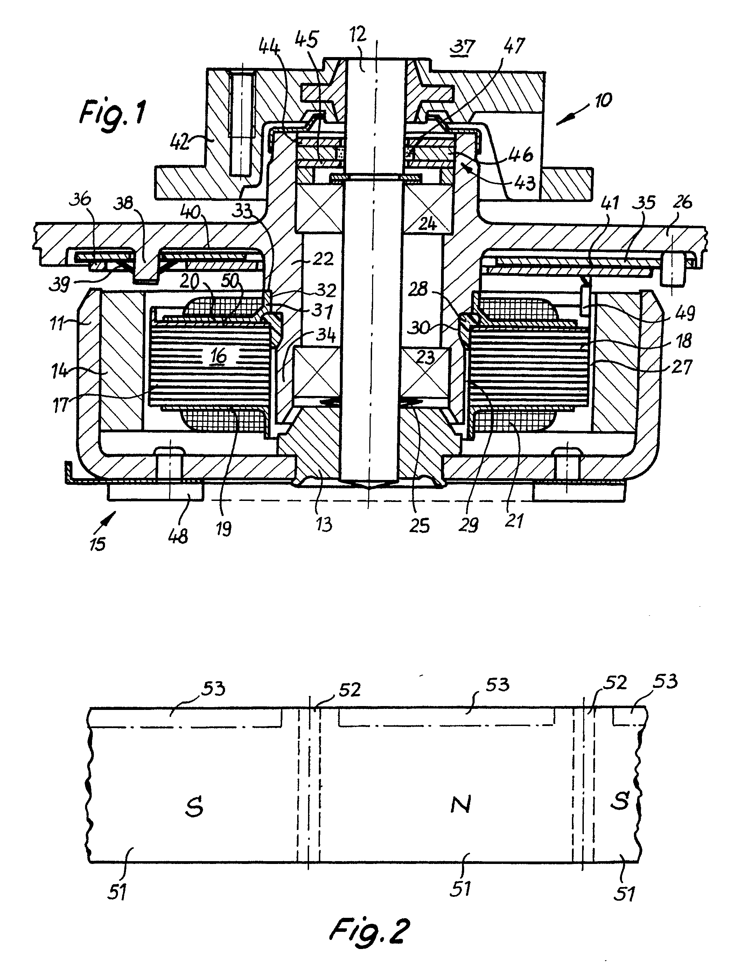

In Fig. 1 ist ein als kollektorloser Gleichstrommotor aufgebauter Außenläufer-Direktantriebsmotor für Festplattenspeicher veranschaulicht, der insgesamt mit 10 bezeichnet ist. Der Motor weist ein becherförmiges Rotorgehäuse 11 auf, das konzentrisch zu einer Rotorwelle 12 sitzt und mit dieser über eine Buchse 13 fest verbunden ist, die in eine Mittelöffnung des Rotorgehäuses eingepreßt ist. In dem aus magnetisch gut leitendem Werkstoff bestehenden Rotorgehäuse 11 sind eine Mehrzahl von Permanentstücken oder ein einteiliger Permanentring 14 angebracht, der zusammen mit den Bauteilen 11 bis 13 den Rotor 15 des Motors 10 bildet. Der Permanentmagnetring 14 besteht vorzugsweise aus einer Mischung von Hartferrit, z.B. Bariumferrit, und elastischem Material. Es handelt sich also um einen sogenannten Gummimagneten. Dieser ist über der Polteilung trapezförmig oder annähernd trapezförmig bei relativ kleiner Pollücke radial magnetisiert. Das Rotorgehäuse 11 kann als Tiefziehteil hergestellt sein.

Zu dem Stator 16 des Motors 10 gehört insbesondere ein Wicklungskern 17, der aus dem eigentlichen Statoreisen 18, im allgemeinen in Form eines Statorblechpakets, sowie aus Endscheiben 19, 20 besteht und der eine Statorwicklung 21 trägt. Der Wicklungskern 17 ist an einem rohrförmigen Lagertragteil 22 abgestützt. Die Rotorwelle 12 ist in dem Lagertragteil 22 mit Hilfe von zwei Kugellagern 23, 24 gelagert, die sich mit ihren einander zugewendeten Stirnseiten an entsprechenden Schultern des Lagertragteils 22 abstützen und die unterschiedliche Anzahlen von Kugeln aufweisen. Eine Tellerfeder 25 legt sich gegen die Unterseite des Innenrings des Kugellagers 23 und die diesem Kugellager zugewendete Stirnseite der Buchse 13 an, wodurch die Kugellager axial gegeneinander verspannt werden. Das Lagertragteil bildet zusammen mit einem Befestigungsflansch 26 ein einstük-

kiges Druckgußteil. Statt dessen kann das Lagertragteil auch mit Preßsitz in einer mit dem Befestigungsflansch verbundenen Nabe sitzen oder mit dem Befestigungsflansch auf andere Weise fest verbunden, z.B. verlötet sein. Der Magnetring 14 und der Wicklungskern 17 begrenzen einen im wesentlichen zylindrischen Luftspalt 27.

Wie aus Fig. 1 hervorgeht, ist der Stator 16 mit dem Lagertragteil 22 über eine elastische Dämpfungsanordnung verbunden, die axial oberhalb des Kugellagers 23 sitzt und aus einem ringförmigen Zwischenstück 28 aus einer weichen Vergußmasse besteht. In dem in Fig. 1 axial unterhalb des Zwischenstücks 28 liegenden Bereich sind der Stator 16 und das Lagertragteil 22 durch einen engen Luftspalt 29 voneinander getrennt. Bei der Montage des Motors 10 wird zweckmäßig zunächst in eine Rille 30 an der Mantelfläche des Lagertragteils 22 eine Raupe aus einer elastischen Vergußmasse, beispielsweise aus einem Polyurethan-Härter-Gemisch, eingebracht. Dann wird der Stator 16 auf das Lagertragteil 22 aufgeschoben, bis sich ein ringförmiger Ansatz 31 der Endscheibe 20 mit seiner Innenfläche gegen einen Abschnitt 32 der Mantelfläche des Lagertragteils 22 sowie mit seiner Stirnfläche gegen eine Schulter 33 des Lagertragteils 22 anlegt. Der Stator 16 wird mit Bezug auf die Achse der Rotorwelle 12 zentriert. Anschließend wird die Vergußmasse ausgehärtet. Das auf diese Weise entstandene elastische Zwischenstück 28 sorgt für eine formschlüssige Verbindung von Stator 16 und Lagertragteil 22, die in Verbindung mit dem Luftspalt 29 die Schallschwingungsübertragung zwischen den Bauteilen 16, 22 wirkungsvoll dämpft. Die mechanische Verbindung der Bauteile 16, 22 befindet sich bei der Ausführungsform der Fig. 1 an einer Stelle, die vom Ort der Hauptgeräuschquelle axial in Abstand liegt. Die Wand des Lagertragteils 22 kann im Bereich der Anlagezone 34 des Außenringes des Kugellagers 23 elastisch ausweichen. All dies trägt zur wesentlichen Minderung der Geräuschemission bei.

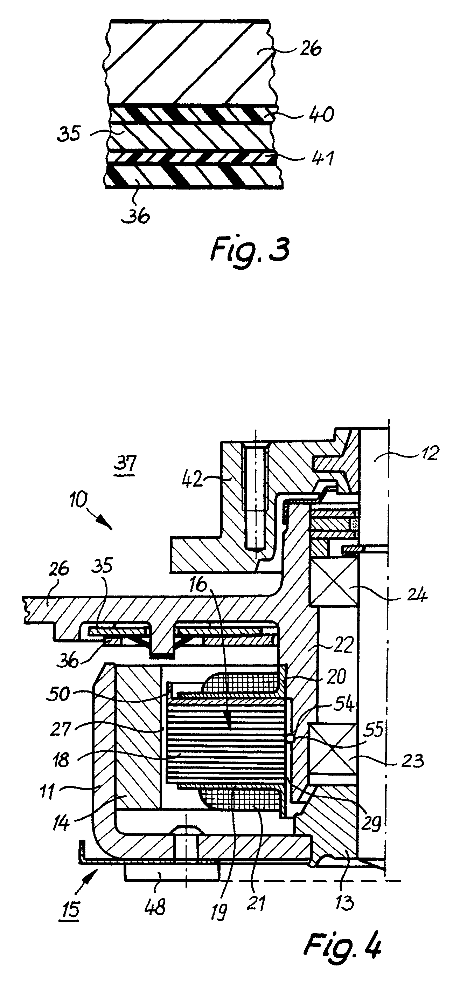

An der Unterseite des Befestigungsflanschs 26 befinden sich ein Abschirmblech 35 aus magnetisch gut leitendem Werkstoff und eine gedruckte Leiterplatte 36. Das Abschirmblech 35 verhindert in Verbindung mit dem Rotorgehäuse 11 und dem Kugellager 24 den Austritt von magnetischen Streufeldern in den von den Hartspeicherplattenen eingenommenen Raum 37. Auf der Leiterplatte 36 sitzen die Antriebselektronik und gegebenenfalls eine Drehzahlregelschaltung, die nicht näher veranschaulicht sind. Der beispielsweise als Aluminiumdruckguß bestehende Befestigungsflansch 26 weist Nasen 38 auf, die durch Ausnehmungen der Bauteile 35, 36 hindurchragen und auf die Federklemmen 39 zum Halten des Abschirmbleches 35 aufgesetzt sind. Zwischen den Befestigungsflansch 26 und das Abschirmblech 35 ist, wie deutlicher aus Fig. 3 hervorgeht, eine Lage 40 aus Vergußmasse, beispielsweise Polyurethan, eingebracht, während sich zwischen dem Abschirmblech 35 und der Leiterplatte 36 eine Lage 41 aus Epoxidkleber oder einem anderen schalldämpfenden Material befindet. Der Befestigungsflansch 26, das Abschirmblech 35 und die Leiterplatte 36 sind auf diese Weise zu einem schalldämpfenden Mehrschichtkörper miteinander verbunden. Es versteht sich, daß gegebenenfalls auch das Abschirmblech und die Leiterplatte ihre Plätze vertauschen können. Daneben können beide Lagen 40, 41 aus Vergußmasse, aus Kleber oder einem sonstigen Schallschwingungen dämpfenden Werkstoff bestehen.

Der Befestigungsflansch 26 gestattet es, den Motor 10 an einer Trennwand eines Hartplattenspeichers anzubringen, die in bekannter Weise (z.B. DE-A- 31 08 204) den Raum 37 vom übrigen Geräteinneren abtrennt. Eine zur Aufnahme einer oder mehrerer Hartspeicherplatten dienende Nabe 42 ist mit dem in Fig. 1 oberen Ende der Rotorwelle 12 fest verbunden. Um das Lagersystem der Rotorwelle 12 gegenüber dem Speicherlattenaufnahmeraum abzudichten, ist im Bereich zwischen der Nabe 42 und dem Lager 24 eine Magnetflüssigkeitsdichtung 43 in das Lagertragteil 22 eingesetzt. Die Dichtung 43 besteht aus zwei Polstücken 44, 45, einem zwischen den Polstücken sitzenden Permanentmagnetring 46 und einer magnetischen Flüssigkeit, die in einen Ringspalt 47 zwischen dem Magnetring 46 und der Rotorwelle 12 eingebracht ist. An der Außenseite des Bodens des Rotorgehäuses 11 ist ein Radialgebläserad 48 befestigt, das Luft im zentralen Bereich anzieht und radial nach außen schleudert.

Entsprechend Fig. 1 ist für die Steuerung der Kommutierung des Motors 10 ein galvanomagnetischer Drestellungssensor, z.B. in Form eines Hallgenerators 49 vorgesehen, der an der Leiterplatte 36 angelötet ist und durch das Feld des Magnetringes 14 beeinflußt wird. Um den Sensor 49 sicher ansprechen zu lassen, steht der Rotormagnet 14 auf der der Leiterplatte 36 zugewendeten Seite über das Statoreisen 18 weiter axial über als an der dem Boden des Rotorgehäuses 11 zugekehrten Seite. Um dadurch hervorgerufen axialen Störkräften entgegenzuwirken, die gleichfalls Anlaß zu Geräuschen sein können, ist auf der Seite größeren axialen überstandes ein Statorendblech 50 vorgesehen. Das Endblech 50 ragt in den Bereich des axial weiter überstehenden Magneten 14 hinein und begrenzt dort in einer vorbestimmten Teilzone den Luftspalt 27. Auf diese Weise erfolgt eine Symmetrierung des Magnetfeldes. Zusätzlich oder statt dessen kann der Rotormagnet 14 im Bereich des größeren axialen überstandes gezielt teilentmagnetisiert sein, wie dies in der Abwicklung gemäß Fig. 2 angedeutet ist. Dabei sind die Rotormagnetpole mit 51, die Pollücken mit 52 und die Bereiche mit abgeschwächter Induktion mit 53 bezeichnet. Die Teilentmagnetisierungsbereiche 53 enden jeweils in einem Abstand von den Pollücken. Daher ist ein einwandfreies Ansprechen des Sensors 49 gewährleistet, während die Teilentmagnetisierung bezüglich der magnetischen Axialkräfte wie eine Verkürzung des größeren Überstandes wirkt.

Die Ausführungsform gemäß Fig. 4 stimmt mit derjenigen der Fig. 1 mit der Ausnahme überein, daß anstelle des Zwischenstückes 28 ein O-Ring 54 vorgesehen ist. Der O-Ring 54 greift in eine Ringnut 55 an der Mantelfläche des Lagertragteils 22 ein. Gegebenenfalls kann eine entsprechende Nut auch in dem Statoreisen vorgesehen sein.

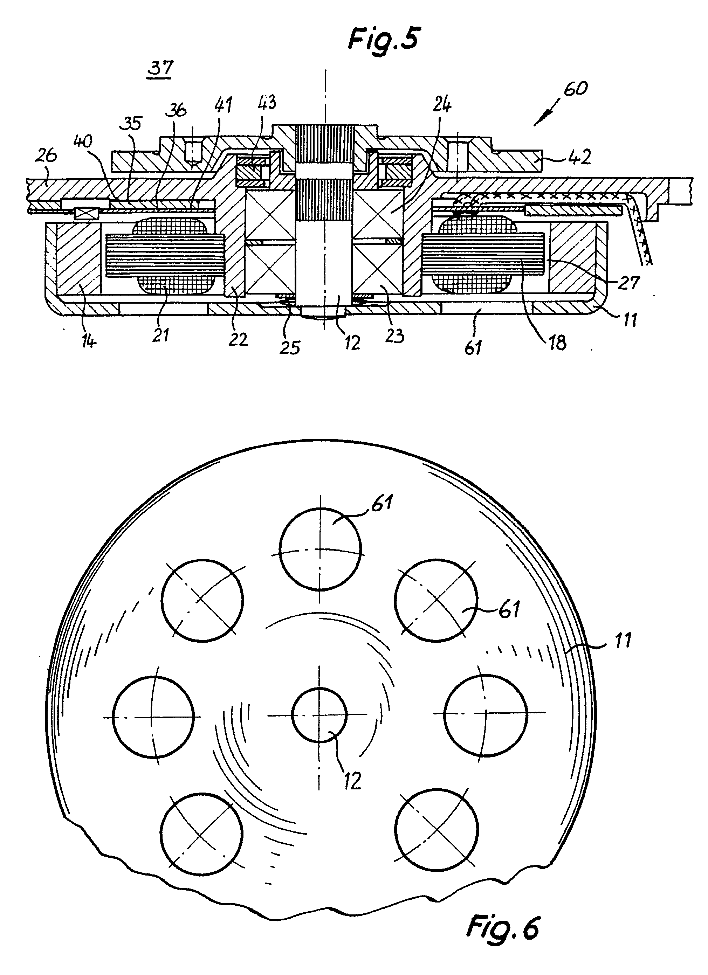

In Fig. 5 ist ein besonders flach aufgebauter Motor 60 dargestellt, wobei Teile, die funktionsmäßig den Teilen der Ausführungsform nach Fig. 1 entsprechen, mit gleichen Bezugszeichen versehen und nicht nochmals näher erläutert sind. Zur Geräuschminderung dienen in diesem Fall der schalldämpfende Mehrschichtaufbau aus Befestigungsflansch 26, Abschirmblech 35, Leiterplatte 36 und den zwischengefügten Lagen 40, 41 sowie im Boden des Rotorgehäuses 11 verteilte Öffnungen 61. Das mit den Öffnungen 61 ausgestattete Rotorgehäuse 11 stellt eine Umkehrung des Prinzips eines Kolbenlautsprechers in einer geschlossenen Box dar. Vorzugsweise sind sieben äquidistant angeordnete Öffnungen vorgesehen.

Es versteht sich, daß die vorstehend erläuterten Schalldämpfungsmaßnahmen grundsätzlich sowohl jeweils allein als auch in beliebigen Kombinationen angewendet werden können. Statt der gezeigten Kugellager können auch Gleitlager vorgesehen werden.

## Patentansprüche

1. Kollektorloser Außenläufer-Gleichstrommotor, insbesondere zum Antrieb eines Hartplattenspeichers, mit

   einem Stator (16) und einem Rotor (15), die zwischen sich einen im wesentlichen zylindrischen Luftspalt (27) bilden, wobei der Stator mit Statoreisen (18) und einer Statorwicklung (21) versehen ist, die bei Erregung ein Elektromagnetfeld erzeugt, wobei der Rotor mit einem im wesentlichen becherförmigen Rotorgehäuse (11) ausgebildet ist und einen Permanentmagnetring (14) trägt und wobei zwischen Rotor und Stator elektromagnetische Kräfte wirken, wenn die Statorwicklung erregt wird;

   einer Rotorwelle (12), die den Rotor trägt und mit diesem drehfest verbunden ist;

einer Lagerung (23, 24) zum drehbaren Lagern der Rotorwelle; und einem feststehenden, im wesentlichen rohrförmigen Lagertragteil (22), das koaxial zu der Rotorwelle angeordnet ist, wobei die Lagerung (23, 24) innerhalb des Lagertragteils sitzt und von diesem abgestützt ist und wobei der Stator (16) außerhalb des Lagertragteils angeordnet und von diesem abgestützt ist;

**dadurch gekennzeichnet**, daß bei dem Motor zur Geräuschminderung die magnetischen Komponenten von Rotor (15) und Stator (16) derart mit Bezug aufeinander angeordnet sind, daß die Summe der magnetischen Axialkräfte zwischen Rotor und Stator minimiert ist.

2. Kollektorloser Außenläufer-Gleichstrommotor nach Anspruch 1, bei dem ein mit Bezug auf eine Axialsymmetrieebene des Statoreisens (18) unsymmetrisch angeordneter permanentmagnetischer Rotor (15) vorgesehen ist.

3. Kollektorloser Außenläufer-Gleichstrommotor nach Anspruch 1 oder 2, bei dem der Stator (16) ein Endblech (50) trägt, das zur axialen Symmetrierung des Magnetfeldes mit dem Rotormagneten (14) zusammenwirkt.

4. Kollektorloser Außenläufer-Gleichstrommotor nach Ansprüchen 2 und 3, bei dem der Rotormagnet (14) über das Statoreisen (18) an dessen beiden Stirnseiten unterschiedlich weit axial übersteht und bei dem das Endblech (50) mindestens einen Teil des Luftspalts (27) im Bereich des größeren Überstandes begrenzt.

5. Kollektorloser Außenläufer-Gleichstrommotor nach einem der vorhergehenden Ansprüche, bei dem der Rotormagnet (14) über das Statoreisen (18) an dessen beiden Stirnseiten unterschiedlich weit axial übersteht und im Bereich des größeren Überstandes die Induktion im mittleren Teil der Rotormagnetpole (51) mindestens bereichsweise schwächer ist als an den an die Pollücken (52) angrenzenden Randbereichen der Rotormagnetpole.

6. Kollektorloser Außenläufer-Gleichstrommotor nach einem oder mehreren der vorhergehenden Ansprüche, bei dem der Stator (16) mit dem Lagertragteil (22) über eine elastische Dämpfungsanordnung (28, 54) verbunden ist.

7. Kollektorloser Außenläufer-Gleichstrommotor nach Anspruch 6, bei dem die elastische Dämpfungsanordnung (28, 54) axial im Bereich der Lagerung (23, 24) der Rotorwelle (12) angeordnet und vorzugsweise axial kurz ausgebildet ist.

8. Kollektorloser Außenläufer-Gleichstrommotor nach Anspruch 7, bei dem die Lagerung zwei Kugellager (23, 24) aufweist und die Dämpfungsanordnung (28, 54) sich mindestens näherungsweise im Bereich eines, vorzugsweise des unteren, Lagers befindet.

9. Kollektorloser Außenläufer-Gleichstrommotor nach einem der Ansprüche 6 bis 8, bei dem die elastische Dämpfungsanordnung (28) eine weiche Vergußmasse zwischen dem Stator (16) und dem Lagertragteil (22) aufweist.

10. Kollektorloser Außenläufer-Gleichstrommotor nach Anspruch 9, bei dem die Vergußmasse nach dem Aushärten ein mit dem Stator (16) und/oder dem Lagertragteil (22) formschlüssig verbundenes Zwischenstück (28) bildet.

11. Kollektorloser Außenläufer-Gleichstrommotor nach Anspruch 10, bei dem das Zwischenstück (28) Ringform hat.

12. Kollektorloser Außerläufer-Gleichstrommotor nach einem oder mehreren der Ansprüche 6 bis 11, bei dem die elastische Dämpfungsanordnung einen oder mehrere elastische O-Ringe (54) aufweist.

13. Kollektorloser Außenläufer-Gleichstrommotor nach Anspruch 12, bei dem der O-Ring (54) mit einem Teil seines Querschnitts in eine entsprechende Nut (55) an den einander zugewendeten Flächen von Stator (16) und/oder Lagertragteil (22) eingreift.

14. Kollektorloser Außenläufer-Gleichstrommotor nach einem oder mehreren der vorhergehenden Ansprüche, bei dem der Stator (16) und das Lagertragteil (22) im Bereich mindestens eines wesentlichen Teils ihrer einander zugewendeten Flächen durch einen weiteren Luftspalt (29) voneinander getrennt sind, der sich vorzugsweise über einen großen Teil der axialen Statoreisenlänge erstreckt.

15. Kollektorloser Außenläufer-Gleichstrommotor nach Anspruch 14, bei dem der Luftspalt (29) den Stator (16) und das Lagertragteil (22) in dem der Lagerung (23) benachbarten Bereich voneinander trennt.

16. Kollektorloser Außenläufer-Gleichstrommotor nach einem der Ansprüche 6 bis 13 und Anspruch 14 oder 15, bei dem der Stator (16) und das Lagertragteil (22) im wesentlichen nur im Bereich der elastischen Dämpfungsanordnung (28, 54) miteinander in Verbindung stehen und im übrigen durch den Luftspalt (29) voneinander getrennt sind.

17. Kollektorloser Außenläufer-Gleichstrommotor nach einem oder mehreren der vorhergehenden Ansprüche, bei dem die Rotorwelle (12) in zwei Kugellagern (23, 24) mit jeweils unterschiedlicher Anzahl von Kugeln gelagert ist.

18. Kollektorloser Außenläufer-Gleichstrommotor nach einem oder mehreren der vorhergehenden Ansprüche, bei dem das Lagertragteil (2) mit einem sich im wesentlichen senkrecht zu der Achse der Rotorwelle (12) erstreckenden Befestigungsflansch (26) verbunden ist und der Befestigungsflansch einen schalldämpfenden Belag (35, 36, 40, 41) aufweist.

19. Kollektorloser Außenläufer-Gleichstrommotor nach Anspruch 18, bei dem der Befestigungsflansch (26) eine Leiterplatte (36) und/oder eine magnetische Abschirmung (35) trägt und der Befestigungsflansch mit der Leiterplatte und/oder der magnetischen Abschirmung zu einem schalldämpfenden Mehrschichtkörper verbunden ist.

20. Kollektorloser Außenläufer-Gleichstrommotor nach Anspruch 19, bei dem zwischen den Schichten (26, 35, 36) des Mehrschichtkörpers eine weiche Vergußmasse (40) und/oder ein elastischer Kleber (41) vorgesehen sind.

21. Kollektorloser Außenläufer-Gleichstrommotor nach einem der Ansprüche 18 bis 20, bei dem der Befestigungsflansch (26) und das Lagertragteil (22) einstückig ausgebildet sind.

22. Kollektorloser Außenläufer-Gleichstrommotor nach einem oder mehreren der vorhergehenden Ansprüche, bei dem im Boden des Rotorgehäuses (11) verteilte Öffnungen (61) vorgesehen sind.

## Claims

1. Commutatorless external rotor-type direct current motor, particularly for driving a rigid disk store, with

a stator (16) and a rotor (15) forming between them a substantially cylindrical air gap (27), the stator having a stator iron (18) and stator winding (21), which, on exciting, produces an electromagnetic field, the rotor being constructed with a substantially cup-shaped rotor casing (11) and carries a permanent magnetic ring (14) and between the rotor and the stator act electromagnetic forces, if the stator winding is excited;

a rotor shaft (12), which carries the rotor and is connected in nonrotary manner thereto;

a bearing support (23, 24) for the rotary mounting of the rotor shaft; and

a fixed, substantially tubular bearing support part (22), which is positioned coaxially to the rotor shaft, the bearing support (23, 24) being located within the bearing support part and is supported by the latter and in which the stator (16) is positioned outside the bearing support part and is supported by the latter.

characterized in that in the case of the motor for noise reduction purposes the magnetic components of the rotor (15) and stator (16) are so arranged with respect to one another that the sum of the magnetic axial forces between the rotor and the stator is minimized.

2. Commutatorless external rotor-type direct current motor according to claim 1, wherein a permanent magnetic ring (15) positioned asymmetrically with respect to the axial plane of symmetry of the stator iron (18) is provided.

3. Commutatorless external rotor-type direct current motor according to claims 1 or 2, wherein the stator (16) carries an endplate (50), which cooperates with the rotor magnet (14) for the axial symmetrization of the magnetic field.

4. Commutatorless external rotor-type direct current motor according to claims 2 and 3, wherein the rotor magnet (14) projects to a varying axial extent over the stator iron (18) at its two end faces and wherein the endplate (50) defines at least part of the air gap (27) in the vicinity of the greater projection.

5. Commutatorless external rotor-type direct current motor according to one of the preceding claims, wherein the rotor magnet (14) projects to a varying axial extent over the stator iron (18) at its two end faces and in the vicinity of the greater projection the induction in the central part of the rotor magnetic poles (51) is at least zonely weaker than in the marginal areas of the rotor magnetic poles adjacent to the pole clearances (52).

6. Commutatorless external rotor-type direct current motor according to one or more of the preceding claims, wherein the stator (16) is connected to the bearing support part (22) via an elastic damping means (28, 54).

7. Commutatorless external rotor-type direct current motor according to claim 6, wherein the elastic damping means (28, 54) is axially positioned in the vicinity of the mounting support (23, 24) of the rotor shaft (12) and is preferably given an axial short construction.

8. Commutatorless external rotor-type direct current motor according to claim 7, wherein the mounting support has two ball bearings (23, 24) and the damping means (28, 54) is at least approximately located in the vicinity of one and preferably the lower bearing.

9. Commutatorless external rotor-type direct current motor according to one of the claims 6 to 8, wherein the elastic damping means (28) has a soft casting material between the stator (16) and the bearing support part (22).

10. Commutatorless external rotor-type direct current motor according to claim 9, wherein the casting material, after complete hardening, forms an intermediate part (28) positively connected to the stator (16) and/or the bearing support part (22).

11. Commutatorless external rotor-type direct current motor according to claim 10, wherein the intermediate part (28) is circular.

12. Commutatorless external rotor-type direct current motor according to one or more of the claims 6 to 11, wherein the elastic damping means has one or more elastic O-rings (54).

13. Commutatorless external rotor-type direct current motor according to claim 12, wherein part of the cross-section of the O-ring (54) engages in a corresponding groove (55) on the facing faces of the stator (16) and/or bearing support part (22).

14. Commutatorless external rotor-type direct current motor according to one or more of the preceding claims, wherein in the vicinity of at least a significant part of their facing faces the stator (16) and the bearing support part (22) are separated from one another by a further air gap (29), which preferably extends over a large part of the axial stator iron lengths.

15. Commutatorless external rotor-type direct current motor according to claim 14, wherein the air gap (29) separates the stator (16) and the bearing support part (22) from one another in the area adjacent to the mounting support (23).

16. Commutatorless external rotor-type direct current motor according to one of the claims 6 to 13 and claim 14 or 15, wherein the stator (16) and the bearing support part (22) are interconnected substantially only in the vicinity of the elastic damping means (28, 54) and are otherwise separated from one another by the air gap (29).

17. Commutatorless external rotor-type direct current motor according to one or more of the preceding claims, wherein the rotor shaft (12) is mounted in two ballbearings (23, 24) having in each case a different number of balls.

18. Commutatorless external rotor-type direct current motor according one or more of the preceding claims, wherein the bearing support part (22) is connected to a mounting flange (26) extending substantially perpendicular to the axis of the rotor shaft (12) and the mounting flange has a sound-absorbing layer (35, 36, 40, 41).

19. Commutatorless external rotor-type direct current motor according to claim 18, wherein the mounting flange (26) carries a printed circuit board (36) and/or a magnetic shield (35) and the mounting flange is connected to the printed circuit board and/or the magnetic shield to form a sound-damping multilayer body.

20. Commutatorless external rotor-type direct current motor according to claim 19, wherein a soft casting material (40) and/or an elastic adhesive (41) is provided between the layers (26, 35, 36) of the multilayer body.

21. Commutatorless external rotor-type direct current motor according to one of the claims 18 to 20, wherein the mounting flange (26) and the bearing support part (22) are constructed in one piece.

22. Commutatorless external rotor-type direct current motor according to one or more of the preceding claims, wherein openings (61) are distributed within the bottom of the rotor casing (11).

**Revendications**

1. Moteur à courant continu à induit extérieur, sans collecteur, en particulier pour l'entraînement d'une mémoire à disque dur, comprenant un stator (16) et un rotor (15) qui forment entre eux un entrefer (27) essentiellement cylindrique, le stator étant pourvu d'un fer statorique (18) et d'un enroulement statorique (21) qui génère un champ électromagnétique lorsqu'il est excité, le rotor étant réalisé avec un corps de rotor (11) essentiellement en forme de godet et portant un aimant permanent annulaire (14), des forces électromagnétiques agissant entre le rotor et le stator lorsque l'enroulement statorique est excité;

un arbre rotorique (12) qui porte le rotor et est relié solidaire en rotation à celui-ci;

un système de palier (23, 24) pour le montage rotatif de l'arbre rotorique; et

un porte-palier (22) fixe, essentiellement tubulaire, qui est disposé coaxial à l'arbre rotorique, le système de palier (23, 24) étant logé à l'intérieur du porte-palier et appuyé par celui-ci et le stator (16) étant disposé à l'extérieur du porte-palier et appuyé par celui-ci;

**caractérisé en ce que**, pour réduire le bruit du moteur, les composants magnétiques du rotor (15) et du stator (16) sont disposés les uns par rapport aux autres de manière que la somme des forces magnétiques axiales entre le rotor et le stator soit réduite à un minimum.

2. Moteur à courant continu à induit extérieur, sans collecteur, selon la revendication 1, comportant un rotor (15) à aimantation permanente disposé de façon asymétrique par rapport à un plan axisymétrique du fer statorique (18).

3. Moteur à courant continu à induit extérieur, sans collecteur, selon la revendication 1 ou 2, dans lequel le stator (16) porte une tôle terminale (50) qui coopère avec l'aimant rotorique (14) en vue de la symétrisation axiale du champ magnétique.

4. Moteur à courant continu à induit extérieur, sans collecteur, selon les revendications 2 et 3, dans lequel l'aimant rotorique (14) forme, à ses deux côtés d'extrémité, des saillies axiales différentes par rapport au fer statorique (18), et dans lequel la tôle terminale (50) délimite au moins une partie de l'entrefer (27) dans la région de la plus grande saillie.

5. Moteur à courant continu à induit extérieur, sans collecteur, selon une des revendications précédentes, dans lequel l'aimant rotorique (14) forme, à ses deux côtés d'extrémité, des saillies axiales différentes par rapport au fer statorique (18) et, dans la région de la plus grande saillie, l'induction dans la partie centrale des pôles magnétiques (51) du rotor est plus faible, au moins dans certaines zones, qu'aux zones marginales adjacentes aux espaces interpolaires (52) des pôles magnétiques du rotor.

6. Moteur à courant continu à induit extérieur, sans collecteur, selon une ou plusieurs des revendications précédentes, dans lequel le stator (16) est relié au porte-palier (22) par un dispositif élastique d'amortissement (28, 54).

7. Moteur à courant continu à induit extérieur, sans collecteur, selon la revendication 6, dans lequel le dispositif élastique d'amortissement (28, 54) est agencé axialement dans la région du système de palier (23, 24) de l'arbre rotorique (12) et possède de préférence une faible longueur axiale.

8. Moteur à courant continu à induit extérieur, sans collecteur, selon la revendication 7, dans lequel le système de palier comporte deux roulements à billes (23, 24) et le dispositif d'amortissement (28, 54) est situé au moins à peu près dans la région d'un roulement, de préférence du roulement inférieur.

9. Moteur à courant continu à induit extérieur, sans collecteur, selon une des revendications 6 à 8, dans lequel le dispositif élastique d'amortissement (28) comprend un compound souple entre le stator (16) et le porte-palier (22).

10. Moteur à courant continu à induit extérieur, sans collecteur, selon la revendication 9, dans lequel le compound forme, après le durcissement, une pièce intermédiaire (28) reliée par imbrication de formes au stator (16) et/ou au porte-palier (22).

11. Moteur à courant continu à induit extérieur, sans collecteur, selon la revendication 10, dans lequel la pièce intermédiaire (28) possède une forme annulaire.

12. Moteur à courant continu à induit extérieur, sans collecteur, selon une ou plusieurs des revendications 6 à 11, dans lequel le dispositif élastique d'amortissement comprend un ou plusieurs joints toriques (54) élastiques.

**13.** Moteur à courant continu à induit extérieur, sans collecteur, selon la revendication 12, dans lequel le joint torique (54) pénètre par une partie de sa section droite dans une gorge complémentaire (55) sur les faces dirigées l'une vers l'autre du stator (16) et/ou du porte-palier (22).

**14.** Moteur à courant continu à induit extérieur, sans collecteur, selon une ou plusieurs des revendications précédentes, dans lequel le stator (16) et le porte-palier (22) sont mutuellement séparés, dans la région d'au moins une partie substantielle de leurs faces dirigées l'une vers l'autre, par un entrefer supplémentaire (29) qui s'étend de préférence sur une grande partie de la longueur axiale du fer statorique.

**15.** Moteur à courant continu à induit extérieur, sans collecteur, selon la revendication 14, dans lequel l'entrefer (29) sépare le stator (16) et le porte-palier (22) l'un de l'autre dans la région voisine du système de palier (23).

**16.** Moteur à courant continu à induit extérieur, sans collecteur, selon une des revendications 6 à 13 et la revendication 14 ou 15, dans lequel le stator (16) et le porte-palier (22) sont, pour l'essentiel, reliés seulement entre eux dans la région du dispositif élastique d'amortissement (28, 54) et sont par ailleurs séparés l'un de l'autre par l'entrefer (29).

**17.** Moteur à courant continu à induit extérieur, sans collecteur, selon une ou plusieurs des revendications précédentes, dans lequel l'arbre rotorique (12) est monté dans deux roulements à billes (23, 24) comportant des nombres différents de billes.

**18.** Moteur à courant continu à induit extérieur, sans collecteur, selon une ou plusieurs des revendications précédentes, dans lequel le porte-palier (22) est relié à une bride de fixation (26) sensiblement perpendiculaire à l'axe de l'arbre rotorique (12) et portant un revêtement insonorisant (35, 36, 40, 41).

**19.** Moteur à courant continu à induit extérieur, sans collecteur, selon la revendication 18, dans lequel la bride de fixation (26) porte une plaquette à circuits imprimés (36) et/ou un blindage magnétique (35) et la bride de fixation est assemblée avec la plaquette à circuits imprimés et/ou le blindage magnétique pour former un corps insonorisant à plusieurs couches.

**20.** Moteur à courant continu à induit extérieur, sans collecteur, selon la revendication 19, dans lequel un compound souple (40) et/ou un adhésif élastique (41) est prévu entre les couches (26, 35, 36) du corps à plusieurs couches.

**21.** Moteur à courant continu à induit extérieur, sans collecteur, selon une des revendications 18 à 20, dans lequel la bride de fixation (26) et le porte-palier (22) sont réalisés d'un seul tenant.

**22.** Moteur à courant continu à induit extérieur, sans collecteur, selon une ou plusieurs des revendications précédentes, dans lequel des orifices (61) sont répartis dans le fond du corps de rotor (11).

EP 0 149 228 B1

Fig.1

Fig.2

Fig. 3

Fig. 4

EP 0 149 228 B1

## Fig.5

## Fig.6